# EUROPÄISCHE PATENTSCHRIFT

(11) **EP 4 326 042 B1**
(45) Veröffentlichungstag und Bekanntmachung des Hinweises auf die Patenterteilung: **28.10.2026**
(21) Anmeldenummer: 22724095.9
(22) Anmeldetag: 21.04.2022
(51) Int. Cl.: A01D 33/08, A01D 41/127, C13B 10/12, G01N 21/3563, G01N 21/85

(54) **MOBILES SYSTEM ZUM ERNTEN UND/ODER TRANSPORTIEREN UND/ODER VERLADEN VON ZUCKERRÜBEN, ZUCKERPRODUKTIONSSYSTEM UND VERFAHREN ZUR ZUCKERPRODUKTION**
MOBILE SYSTEM FOR HARVESTING AND / OR TRANSPORTING AND / OR LOADING SUGAR BEETS, SUGAR PRODUCTION SYSTEM AND SUGAR PRODUCTION METHOD
SYSTÈME MOBILE DE RÉCOLTE ET/OU DE TRANSPORT ET/OU DE CHARGEMENT DE BETTERAVES À SUCRE, SYSTÈME DE PRODUCTION DE SUCRE ET PROCÉDÉ DE PRODUCTION DE SUCRE

(30) Priorität: 23.04.2021 EP 21170222
(43) Veröffentlichungstag der Anmeldung: 28.02.2024
(73) Patentinhaber: Pfeifer & Langen IP GmbH, 50858 Köln (DE)
(72) Erfinder: BURKHARDT, Mark-Oliver, 64319 Pfungstadt (DE); KLOSTERHALFEN, Wolfgang, 50170 Kerpen (DE)
(74) Vertreter: Kutzenberger Wolff & Partner
(86) Internationale Anmeldenummer: PCT/EP2022/060615
(87) Internationale Veröffentlichungsnummer: WO 2022/223729

(56) Entgegenhaltungen:
- WO-A1-2019/185149
- DE-A1- 102018 127 846
- FR-B1- 2 807 163
- US-A1- 2010 216 114
- PAN LEIQING ET AL: "Measurement of moisture, soluble solids, sucrose content and mechanical properties in sugar beet using portable visible and near-infrared spectroscopy", POSTHARVEST BIOLOGY AND TECHNOLOGY, vol. 102, 5 February 2015 (2015-02-05), pages 42 - 50, XP029145080, ISSN: 0925-5214, DOI: 10.1016/J.POSTHARVBIO.2015.02.005

## Beschreibung

### Stand der Technik

Die vorliegende Erfindung betrifft ein mobiles System zum Ernten und/oder Transportieren und/oder Verladen von Zuckerrüben. Ein weiterer Gegenstand der Erfindung ist ein Zuckerproduktionssystem. Die Erfindung betrifft ferner ein Verfahren zur Zuckerproduktion.

Für die industrielle Zuckerproduktion auf Basis von Zuckerrüben ist es unerlässlich, qualitätsbezogene Parameter der Zuckerrüben kurz nach deren Ernte zu erfassen, um Produktionsprozesse wie beispielsweise die Zuckerextraktion oder die Saftreinigung an die Qualität der Zuckerrüben anzupassen. Die Erfassung solcher Parameter der Zuckerrüben findet üblicherweise durch geschultes Personal statt, welches die Zuckerrüben in Augenschein nimmt. Zudem werden üblicherweise Proben entnommen, die in einem Labor untersucht werden, beispielsweise um den Zuckergehalt zu ermitteln. Die Probenentnahme und anschließende Untersuchung im Labor ist mit einer gewissen Durchlaufzeit verbunden, die abgewartet werden muss, bevor die Ergebnisse der Analyse zur Verfügung stehen und Reaktionen, z.B. eine Einstellung von Prozessparametern möglich ist.

In der DE 10 2018 127 846 A1 wird ein Verfahren beschrieben, bei welchem mittels einer optischen Bilderfassungseinheit ein Prüfbild aufgenommen wird, welches Hackfrüchte zeigt, die auf einem Siebband oder einem Walzenenterder aufgenommen sind. Bei dem Verfahren wird die Zusammensetzung des Erntegutstroms ausgewertet. In der Auswertung ergeben sich jeweilige Anteile von Hackfrüchten und Beimengen in Form von Kraut, Erde und Steinen. Die Verhältnisse zwischen den im Erntegutfluss vorhandenen Produkten und Beimengen werden separat erfasst und mit Sollwerten verglichen. Hieraus ergeben sich Regelgrößen für einzelne Betriebsparameter, z.B. der Fahrgeschwindigkeit, der Rodetiefe und/oder der Trenngeräte, welche die Rüben von den Beimengen trennen.

Die GB 2 377 019 A offenbart ein Verfahren zum Trennen von Rüben und Beimengen in Form von Steinen und Erdbrocken durch Vibration.

### Offenbarung der Erfindung

Vor diesem Hintergrund ist es Aufgabe der vorliegenden Erfindung, die Ermittlung der Qualität von Zuckerrüben nach deren Ernte mit geringem zeitlichen und personellen Aufwand zu ermöglichen.

Zur Lösung der Aufgabe wird ein mobiles System zum Ernten und/oder Transportieren und/oder Verladen von Zuckerrüben gemäß Patentanspruch 1 vorgeschlagen.

Das erfindungsgemäße mobile System umfasst ein optisches Bilderfassungssystem, durch welches qualitätsbezogene Parameter der Zuckerrüben bereits kurz nach deren Ernte ermittelt werden können. Es ist daher möglich die in der Zuckerproduktion ablaufenden Prozesse, beispielsweise in der Saftextraktion und/oder Saftreinigung an die ermittelte Qualität der Zuckerrüben anzupassen. Es ist hierzu nicht erforderlich, geschultes Personal einzusetzen, welches de Zuckerrüben in Augenschein nimmt. Zudem sind die Ergebnisse der Bestimmung - also eines oder mehrerer für die Zuckerproduktion geeigneter Nutzanteile der Zuckerrüben und/oder die eines oder mehrerer für die Zuckerproduktion nicht geeigneter Restanteile der Zuckerrüben - mit geringer Zeitverzögerung verfügbar.

Erfindungsgemäß ist das optische Bilderfassungssystem dazu eingerichtet, mehrere für die Zuckerproduktion geeignete Nutzanteile der Zuckerrüben zu bestimmen, welche einen Anteil von Rübenköpfen und einen Anteil von Rübenkörpern und einen Anteil von Rübenschwänzen umfassen. Alternativ oder zusätzlich kann vorgesehen sein, dass das optische Bilderfassungssystem dazu eingerichtet ist, mehrere für die Zuckerproduktion nicht geeignete Restanteile der Zuckerrüben zu bestimmen, beispielsweise einen Anteil an Blättern, Unkraut und/oder Verschmutzungen. Das optische Bilderfassungssystem kann hierzu eine Bilderkennungseinheit umfassen, die als Hardware- und/oder Softwareeinheit ausgebildet sein kann.

Gemäß einer vorteilhaften Ausgestaltung der Erfindung umfasst das mobile System eine Rübenaufnahme zur Aufnahme zumindest einer ersten Teilmenge der Zuckerrüben als Schüttung oder Rübenstrom, wobei das optische Bilderfassungssystem eine erste optische Bilderfassungsvorrichtung zur Erfassung der Schüttung aufweist, die dazu konfiguriert ist, als Nutzanteil einen Anteil von Rübenköpfen und Rübenkörpern und Rübenschwänzen an der Schüttung bzw. dem Rübenstrom zu bestimmen und als Restanteil einen Anteil von Fremdkörpern, insbesondere Blättern, Unkraut oder Verschmutzungen, der Schüttung bzw. dem Rübenstrom zu bestimmen. Eine derartige Ausgestaltung ermöglicht das kontaktlose Erfassen unzerkleinerter Zuckerrüben. Die erste optische Bilderfassungseinrichtung kann als Kamera ausgebildet sein. Durch Ermittlung des Anteils von Rübenköpfen und/oder Rübenkörpern und/oder Rübenschwänzen können Aussagen über die Qualität der Zuckerrüben gewonnen werden. Die Ermittlung eines Anteils an Blättern, Unkraut oder Verschmutzungen kann eine Aussage zur Qualität der Ernte gewonnen werden. Optional kann zusätzlich in Abhängigkeit von dem ermittelten Anteil an Fremdkörpern, insbesondere Blättern, Unkraut und Verschmutzungen, eine Trennung dieses Anteils von den Zuckerrüben bzw. eine Ausschleusung dieses Anteils erfolgen. Insofern ist bevorzugt eine Trenneinrichtung zum Trennen des bestimmten Restanteils, insbesondere des Anteils an Fremdkörpern, von der Schüttung bzw. dem Rübenstrom vorgesehen. Die Ausschleusung kann entsprechend der Art der Fremdkörper gewählt werden, z.B. mittels Druckluft, Klappen oder Greifern.

Gemäß einer vorteilhaften Ausgestaltung der Erfindung umfasst das mobile System eine Schneideinrichtung zum Schneiden zumindest einer zweiten Teilmenge der Zuckerrüben zu einer geschnittenen Teilmenge umfassend geschnittene Zuckerrüben und Fremdkörper, insbesondere Blätter, Unkraut oder Verschmutzungen, und eine Nahinfrarotspektroskopie-Vorrichtung zur Bestimmung von Inhaltstoffen der geschnittenen Teilmenge, insbesondere der geschnittenen Zuckerrüben, wobei das optische Bilderfassungssystem eine zweite optische Bilderfassungsvorrichtung zur Erfassung der geschnittenen Teilmenge aufweist, die dazu konfiguriert ist, als Nutzanteil einen Anteil der geschnittenen Zuckerrüben und/oder als Restanteil einen Anteil der Fremdkörper an der geschnittenen Teilmenge zu bestimmen. Die Kombination der optischen Bilderfassung mit der Nahinfrarotspektroskopie-Vorrichtung ermöglicht es, Angaben zu einzelnen Inhaltsstoffen der Rüben und deren Gehalt zu erlangen. Optional kann durch die Kombination zusätzlich eine Angabe zum Fäulnisgrad der Zuckerrüben erhalten werden, beispielsweise mittels Farberkennung. Die Nahinfrarotspektroskopie-Vorrichtung - auch NIRS-Vorrichtung bezeichnet - kann Messdaten erfassen, aus denen Rückschlüsse auf die Inhaltsstoffe der untersuchten geschnittenen Zuckerrüben gezogen werden können. Die NIRS-Vorrichtung macht dabei Gebrauch von einem Verfahren, bei dem die zu untersuchenden geschnittenen Zuckerrüben mit elektromagnetischer Strahlung im nahen Infrarotbereich bestrahlt werden, z.B. in einem Spektralbereich von 400 nm bis 2.500 nm. Durch derartige Bestrahlung kann es zur Anregung von Molekülschwingungen in dem untersuchten Material kommen. Die durch die Molekülschwingungen ausgelöste elektromagnetische Strahlung im Nahinfrarotbereich, z.B. in einem Spektralbereich von 400 nm bis 2.500 nm, wird detektiert und spektroskopisch aufgelöst. Aus den erfassten Spektren können Art und/oder Menge von Inhaltstoffen der untersuchten Materialien ermittelt werden. Die geschnittenen Zuckerrüben können ohne weitere Behandlung mit der Nahinfrarotspektroskopie-Vorrichtung erfasst werden. Bevorzugt kann die Nahinfrarotspektroskopie-Vorrichtung mehrere Detektoren umfassen, die gegenüber den geschnittenen Zuckerrüben unterschiedlich orientiert angeordnet sind. Durch eine derartige kontaktlose Messung aus mehreren Richtungen können die Inhaltsstoffe mit erhöhter Genauigkeit ermittelt werden. Die zweite optische Bilderfassungseinrichtung kann als Kamera ausgebildet sein. Bevorzugt ist die zweite optische Bilderfassungsvorrichtung dazu konfiguriert, eine oder mehrere geometrische Eigenschaften der geschnittenen Zuckerrüben, insbesondere eine Länge und/oder eine Breite und/oder eine Querschnittsfläche, zu bestimmen. Die zusätzlich bestimmten optisch erfassbaren Eigenschaften der geschnittenen Zuckerrüben können die Analyse verbessern. Die optische Bilderfassungsvorrichtung ist bevorzugt auf denselben Bereich der geschnittenen Teilmenge gerichtet wie die Nahinfrarotspektroskopie-Vorrichtung, so dass die ersten Messdaten der Nahinfrarotspektroskopie-Vorrichtung und die durch die optische Bilderfassungseinrichtung bestimmten Eigenschaften sich auf identische geschnittenen Zuckerrüben beziehen. Optional kann zusätzlich in Abhängigkeit von dem ermittelten Anteil an Fremdkörpern, insbesondere Blättern, Unkraut und Verschmutzungen, eine Trennung dieses Anteils von den geschnittenen Zuckerrüben bzw. eine Ausschleusung dieses Anteils erfolgen. Insofern ist bevorzugt eine Trenneinrichtung zum Trennen des bestimmten Restanteils, insbesondere des Anteils an Fremdkörpern, von der geschnittenen Teilmenge vorgesehen. Die Ausschleusung kann entsprechend der Art der Fremdkörper gewählt werden, z.B. mittels Druckluft, Klappen oder Greifern.

Die Schneideinrichtung ist bevorzugt dazu eingerichtet, die Zuckerrüben entlang einer Achse der Zuckerrübe aufzuschneiden, beispielsweise in zwei Hälften, drei Drittel oder vier Viertel. Insofern können die geschnittenen Zuckerrüben als Zuckerrübenhälften, Zuckerrübendrittel oder Zuckerrübenviertel ausgebildet sein. Alternativ kann vorgesehen sein, dass die Schneideinrichtung dazu eingerichtet ist, die Zuckerrüben in Zuckerrübenschnitzel zu zerkleinern, so dass die geschnittenen Zuckerrüben als Zuckerrübenschnitzel ausgebildet sind.

Eine vorteilhafte Ausgestaltung der Erfindung sieht vor, dass das mobile System als Rübenroder, ausgebildet ist und eine Rodevorrichtung zum Roden der Zuckerrüben sowie einen Vorratsbunker zum Lagern der Zuckerrüben aufweist. Der Vorratsbunker kann die Rübenaufnahme zur Aufnahme der ersten Teilmenge der Zuckerrüben als Schüttung bilden. Eine derartige Ausgestaltung des mobilen Systems bietet den Vorteil, dass die Zuckerrüben unmittelbar nach deren Ernte noch auf dem Feld analysiert werden können.

Bevorzugt umfasst der Rübenroder eine Positionsbestimmungseinrichtung, durch welche die Position des Rübenroders in dem jeweiligen landwirtschaftlichen Schlag ermittelt werden kann. Hierdurch wird es möglich, den mit der optischen Bilderfassungsvorrichtung bestimmten Nutzanteil und/oder Restanteil mit der Position zu verknüpfen und Aussagen über die Verteilung der Qualität der Zuckerrüben innerhalb des Schlags zu ermöglichen. Bevorzugt umfasst der Rübenroder eine Zuführeinrichtung, welche dazu eingerichtet ist, der Schneideinrichtung Zuckerrüben aus dem Vorratsbunker zuzuführen. Über die Zuführvorrichtung können Zuckerrüben aus dem Vorratsbunker entnommen und der Analyse durch Zerkleinern und anschließende Erfassung durch die Nahinfrarotspektroskopie-Vorrichtung und die zweite optische Bilderfassungsvorrichtung zugeführt werden. Alternativ kann vorgesehen sein, dass das mobile System, insbesondere der Rübenroder, eine Zuführeinrichtung umfasst, welche dazu eingerichtet ist, mit der Rodevorrichtung gerodete Rüben der Schneideinrichtung zuzuführen, ohne dass die Zuckerrüben in den Vorratsbunker gelangen.

Eine alternative, vorteilhafte Ausgestaltung der Erfindung sieht vor, dass das mobile System als Rübenreinigungslader ausgebildet ist und eine Aufnahmeeinheit zur Aufnahme von Zuckerrüben, eine Reinigungseinheit zur Reinigung der aufgenommenen Zuckerrüben und einen Überlader zur Ausgabe der gereinigten Zuckerrüben, insbesondere an ein separates Transportfahrzeug, aufweist. Derartige Rübenreinigungslader werden auch als MAUS bezeichnet, wobei sich die Abkürzung aus den Anfangsbuchstaben der Wörter Mieten, Aufnahme, Umladen und System zusammensetzt. Der Rübenreinigungslader kann Zuckerrüben aus einer Miete auf dem Feld aufnehmen, reinigen und in ein geeignetes Transportfahrzeug verladen. Bevorzugt umfasst der Rübenreinigungslader eine Zuführeinrichtung, welche dazu eingerichtet ist, der Schneideinrichtung gereinigte Rüben zuzuführen. Alternativ kann vorgesehen sein, dass der Rübenreinigungslader eine Zuführeinrichtung umfasst, welche dazu eingerichtet ist, der Schneideinrichtung Rüben aus dem Überlader zuzuführen.

Eine alternative, vorteilhafte Ausgestaltung der Erfindung sieht vor, dass das mobile System als Rübentransporter ausgebildet ist und eine Ladefläche zur Aufnahme der Zuckerrüben aufweist. Eine derartige Ausgestaltung bietet den Vorteil, dass die Analyse der Zuckerrüben während des Transports, beispielsweise zu einer Zuckerproduktionsanlage, erfolgen kann. Die weiteren Verarbeitungsschritte nach dem Transport können dann kurzfristig auf das Ergebnis der Analyse abgestimmt werden. Bevorzugt weist der Rübentransporter eine Zuführeinrichtung auf, welche dazu eingerichtet ist, der Schneideinrichtung Zuckerrüben von der Ladefläche zuzuführen.

Das mobile System umfasst bevorzugt eine Kommunikationsschnittstelle, insbesondere zur drahtlosen Kommunikation, über welche Daten betreffend den bestimmten Nutzanteil und/oder en bestimmten Restanteil und/oder betreffend die bestimmten Inhaltsstoffe zu übertragen, insbesondere an eine Zuckerproduktionsanlage.

Zur Lösung eingangs genannter Aufgabe wird ferner ein Zuckerproduktionssystem vorgeschlagen, mit einer vorstehend erläuterten mobilen Einrichtung und mit einer Zuckerproduktionsanlage, wobei die Zuckerproduktionsanlage dazu eingerichtet ist, mindestens einen Prozessparameter in Abhängigkeit von dem mit dem optischen Bilderfassungssystem bestimmten Nutzanteil und/oder Restanteil einzustellen.

Bei dem Zuckerproduktionssystem können dieselben Vorteile erreicht werden, wie sie im Zusammenhang mit dem mobilen System beschrieben worden sind.

Gemäß einer vorteilhaften Ausgestaltung des Zuckerproduktionssystems ist vorgesehen, dass die Zuckerproduktionsanlage dazu eingerichtet ist, den Prozessparameter zusätzlich in Abhängigkeit von den mit der Nahinfrarotspektroskopie-Vorrichtung bestimmten Inhaltsstoffen einzustellen.

Ein weiterer Gegenstand der Erfindung ist ein Verfahren zur Zuckerproduktion gemäß Patentanspruch 9.

Bei dem Verfahren zur Zuckerproduktion können dieselben Vorteile erreicht werden, wie sie im Zusammenhang mit dem mobilen System beschrieben worden sind.

Eine vorteilhafte Ausgestaltung des Verfahrens sieht vor, dass eine erste Teilmenge der Zuckerrüben als Schüttung in einer Rübenaufnahme des mobilen Systems aufgenommen wird, wobei das optische Bilderfassungssystems eine erste optische Bilderfassungsvorrichtung zur Erfassung der Schüttung aufweist, mit der als Nutzanteil ein Anteil Rübenköpfen und/oder Rübenkörpern und/oder Rübenschwänzen an der Schüttung bestimmt wird und/oder mit der als Restanteil ein Anteil von Fremdkörpern, insbesondere Blättern, Unkraut oder Verschmutzungen, bestimmt wird. Bei einer derartigen Ausgestaltung des Verfahrens werden Zuckerrüben kontaktlos erfasst, ohne dass es erforderlich ist, diese zu zerkleinern. Durch Ermittlung des Anteils von Rübenköpfen und/oder Rübenkörpern und/oder Rübenschwänzen können Aussagen über die Qualität der Zuckerrüben gewonnen werden. Die Ermittlung eines Anteils an Blättern, Unkraut oder Verschmutzungen kann eine Aussage zur Qualität der Ernte gewonnen werden. Optional kann zusätzlich in Abhängigkeit von dem ermittelten Anteil an Fremdkörpern, insbesondere Blättern, Unkraut und Verschmutzungen, eine Trennung dieses Anteils von der Schüttung bzw. dem Rübenstrom bzw. eine Ausschleusung dieses Anteils erfolgen. Die Ausschleusung kann entsprechend der Art der Fremdkörper gewählt werden, z.B. mittels Druckluft, Klappen oder Greifern.

Eine vorteilhafte Ausgestaltung des Verfahrens sieht vor, dass mit einer Schneideinrichtung des mobilen Systems zumindest eine zweite Teilmenge der Zuckerrüben zu einer geschnittenen Teilmenge umfassend geschnittene Zuckerrüben und Fremdkörper zerkleinert wird, wobei mit einer Nahinfrarotspektroskopie-Vorrichtung des mobilen Systems Inhaltsstoffe der geschnittenen Teilmenge, insbesondere der geschnittenen Zuckerrüben, bestimmt werden und wobei das optische Bilderfassungssystem eine zweite optische Bilderfassungsvorrichtung aufweist, mit der als Nutzanteil ein Anteil der geschnittene Zuckerrüben und/oder mit der als Restanteil ein Anteil der Fremdkörper an der geschnittenen Teilmenge bestimmt wird. Die Kombination der optischen Bilderfassung mit der Nahinfrarotspektroskopie-Vorrichtung ermöglicht es, Angaben zu einzelnen Inhaltsstoffen der Rüben und deren Gehalt zu erlangen. Optional kann zusätzlich in Abhängigkeit von dem ermittelten Anteil an Fremdkörpern, insbesondere Blättern, Unkraut und Verschmutzungen, eine Trennung dieses Anteils von den geschnittenen Zuckerrüben bzw. eine Ausschleusung dieses Anteils erfolgen. Die Ausschleusung kann entsprechend der Art der Fremdkörper gewählt werden, z.B. mittels Druckluft, Klappen oder Greifern.

Mit der Nahinfrarotspektroskopie-Vorrichtung können beispielsweise folgende Inhaltsstoffe bzw. deren Gehalt angeben werden: Sacharose, Fructose, Glucose, Milchsäure, Oxalsäure, Oxalate, Nitrate, Nitrite, Pektine, Dextrane, Stickstoff. Die optische Bilderfassungsvorrichtung kann zusätzlich Angaben die Farbe des untersuchten Materials, beispielsweise im Lab-Farbraum ermitteln.

Eine vorteilhafte Ausgestaltung des Verfahrens sieht vor, dass mit der Nahinfrarotspektroskopie-Vorrichtung des mobilen Systems der Gehalt an Zucker, insbesondere Saccharose, in der geschnittenen Teilmenge bestimmt wird. Der Zuckergehalt ist von besonderer Bedeutung für die weitere Verarbeitung der Zuckerrüben. So kann die weitere Verarbeitung der Zuckerrüben, die mit dem mobilen System untersucht wurden, in Abhängigkeit von dem ermittelten Zuckergehalt erfolgen. Beispielsweise können mehrere Chargen von Zuckerrüben mit einem oder mehreren mobilen Systemen untersucht werden und es können Zuckerrüben mit ähnlichem Zuckergehalt zusammengefasst und/oder für die gemeinsame Weiterverarbeitung vorgesehen werden. Zudem kann der Zuckergehalt als Eingangsgröße für die Berechnung eines Abnahmepreises für die Zuckerrüben herangezogen werden.

Eine vorteilhafte Ausgestaltung der Erfindung sieht vor, dass der in Abhängigkeit von dem bestimmten Nutzanteil und/oder Restanteil eingestellte Prozessparameter ein Prozessparameter einer Extraktionseinrichtung (Diffusion) ist, welcher Zuckerrübenschnitzel zugeführt und aus der Zuckerrübenschnitzelreste sowie Rohsaft abgezogen werden. Bei dem Prozessparameter kann es sich beispielsweise um eine Extraktionszeit handeln, die angibt, für welche Dauer die Zuckerrübenschnitzel in der Extraktionseinrichtung verweilen und/oder eine Extraktionstemperatur, die angibt, bei welcher Temperatur die Extraktionseinrichtung betrieben wird.

Eine vorteilhafte Ausgestaltung der Erfindung sieht vor, dass der Prozessparameter ein Prozessparameter eines Kalkungsschritts oder eines Karbonisierungsschritts oder eines Filtrierungsschritts oder eines Eindickungsschritts (Aufkonzentrierung) oder eines Kristallisationsschritts oder eines Trennschritts ist. Bei dem mindestens einen Prozessparameter kann es sich beispielsweise um eine Kalkmilchzugabemenge und/oder einen Sollwert des pH-Werts und/oder eine Konzentration der Kalkmilch und/oder eine Zugabemenge von gefälltem Calciumcarbonat (engl. *precipitated calcium carbonate,* kurz PCC) und/oder eine Schlammsaft(konzentrat)rücknahmemenge handeln. In dem Eindickungsschritt und/oder Kristallisationsschritt kann als Prozessparameter beispielsweise eine Eindampftemperatur (Prozesstemperatur) beim Eindicken des Dünnsafts und/oder eine Verweilzeit beim Eindicken des Dünnsafts und/oder eine Anzahl an Kristallisationsschritten des beim Eindicken gebildeten Dicksafts eingestellt werden.

Bei dem Zuckerproduktionssystem sowie dem Verfahren können auch die um Zusammenhang mit dem mobilen System beschriebenen vorteilhaften Ausgestaltungen und Merkmale allein oder in Kombination Anwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhaft Ausführungsform der Erfindung, welche den Erfindungsgedanken nicht einschränkt.

### Kurze Beschreibung der Figuren

Die **Fig. 1** zeigt ein Verfahren zur Zuckerproduktion gemäß einem Ausführungsbeispiel der Erfindung.
Die **Fig. 2** zeigt ein mobiles System gemäß einem ersten Ausführungsbeispiel der Erfindung in einem Blockdiagramm.
Die **Fig. 3** zeigt ein mobiles System gemäß einem zweiten, nicht-erfindungsgemäßen Ausführungsbeispiel in einem Blockdiagramm.
Die **Fig. 4** zeigt ein mobiles System gemäß einem dritten Ausführungsbeispiel der Erfindung in einem Blockdiagramm.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

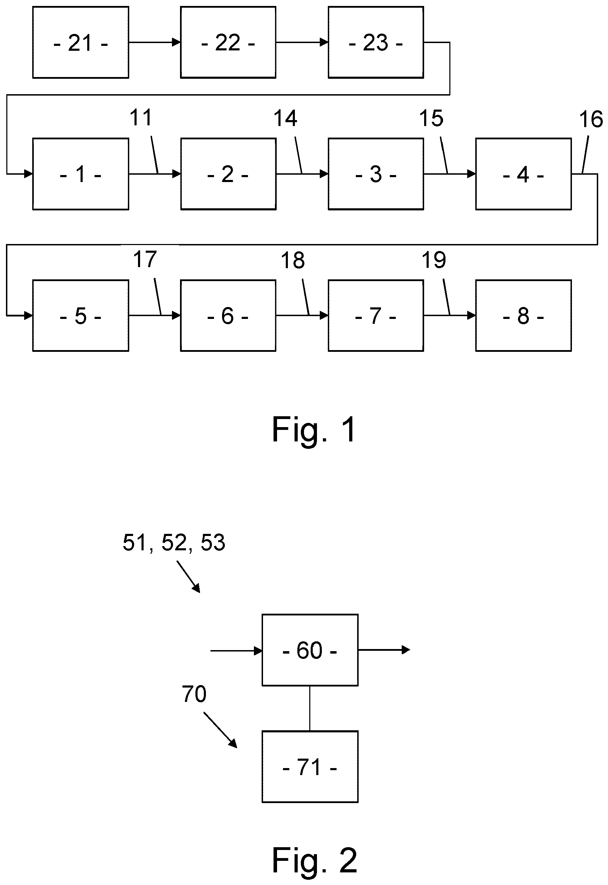

Das in **Fig.** 1 dargestellte Ablaufdiagramm zeigt ein Ausführungsbeispiel eines erfindungsgemäßen Verfahrens zur Zuckerproduktion. In einem Verfahrensschritt des Rodens 21 werden die Zuckerrüben zunächst mit einem ersten als Rübenroder ausgebildeten mobilen System geerntet und in Mieten auf dem Feld abgelegt. In einem nachfolgenden Verfahrensschritt des Verladens 22 nimmt ein zweites als Rübenreinigungslader ausgebildetes mobiles System die Zuckerrüben auf, reinigt diese und verlädt die Zuckerrüben in ein drittes als Rübentransporter ausgebildetes mobiles System. In einem Verfahrensschritt des Transportierens 23 werden die Zuckerrüben mit dem Rübentransporter zu einer Zuckerproduktionsanlage transportiert, in welcher die nachfolgend erläuterten Verfahrensschritte durchgeführt werden.

Die in der Zuckerproduktionsanlage angelieferten Zuckerrüben werden bevorzugt zunächst nochmals gereinigt, also von Anhaftungen, wie beispielsweise Erde, Sand oder Blättern zu befreien. In einem ersten Verfahrensschritt des Schneidens 1 werden die Zuckerrüben durch eine Schneidemaschine zerkleinert, um Zuckerrübenschnitzel 11 zu erhalten.

Die Zuckerrübenschnitzel werden in einem dem Schneiden 1 nachfolgenden Verfahrensschritt der Extraktion 2 oder Saftgewinnung werden die Rübenschnitzel in einer Extraktionseinrichtung Wasser ausgelaugt. Optional können die Zuckerrübenschnitzel zunächst vorgewärmt werden, beispielsweise in einem Bereich von 60 °C bis 80 °C, um die Zellwände durchlässiger zu machen. Die eigentliche Extraktion 2 erfolgt in einem Gegenstromverfahren, bei welchem die Zuckerrübenschnitzel im Gegenstrom zu heißem Wasser durch die Extraktionseinrichtung gefördert bzw. geleitet werden. Als Produkt der Extraktion 2 wird neben Zuckerrübenschnitzelresten der Rohsaft 14 erhalten, welcher fast den gesamten in den Zuckerrüben enthaltenen Zucker enthält.

Dem Rohsaft 14 wird in einem Verfahrensschritt der Kalkung 3 Kalk in Form von Kalkmilch zugesetzt. Der Kalk bindet in dem Rohsaft 14 enthaltene Nichtzuckerstoffe. Säuren werden neutralisiert und der pH-Wert angehoben.

In dem anschließenden Verfahrensschritt der Karbonisierung 4 wird Kohlendioxid in die Mischung 15 aus Rohsaft und Kalkmilch eingeleitet. Calcium und andere Nichtzuckerstoffe werden gebunden und fallen als Kalk (Calciumcarbonat) aus. Es wird eine Mischung 15 aus Rohsaft und ausgefällten Nichtzuckerstoffen erhalten. In den anschließenden Verfahrensschritt der Filtration 5 werden der Kalk und die Nichtzuckerstoffe dann abgetrennt und es verbleibt der Dünnsaft 17. Die Verfahrensschritte der Kalkung 3, Karbonisierung 4 und Filtration 5 werden zusammen auch aus Saftreinigung bezeichnet. Die Schritte Kalkung 3, Karbonisierung 4 und Filtration 5 können optional in dieser Reihenfolge mehrmals, beispielsweise zweimal, hintereinander durchgeführt werden, um das Reinigungsergebnis zu verbessern.

Daran schließt sich der Verfahrensschritt der Eindickung 6 an, in welchem der Dünnsaft 17 in einem meist mehrstufigen Erwärmungsprozess eingedickt wird, um den Dicksaft 18 zu erhalten.

Der Dicksaft wird in einem Verfahrensschritt der Kristallisation 7 bei hoher Temperatur und Unterdruck Zucker auskristallisiert. Die Kristallisation 7 umfasst bevorzugt mehrere aufeinanderfolgende Kristallisationsschritte. Erhalten wird eine Mischung 19 aus Dicksaft und Kristallzucker, die auch als Magma bezeichnet wird.

Schließlich wird in einem in einem Verfahrensschritt des Trennens 8, beispielsweise in einer Zentrifuge, der Kristallzucker abgetrennt.

Bei dem Verfahren zur Zuckerproduktion können mobile Systeme 51, 52, 53 verwendet werden, wie sie nachfolgend anhand der Darstellungen in den folgenden Figuren erläutert werden. Diese mobilen Systeme 51, 52, 53 umfassen jeweils ein optisches Bilderfassungssystem 70, das zur Bestimmung mindestens eines für die Zuckerproduktion geeigneten Nutzanteils der Zuckerrüben und/oder zur Bestimmung mindestens eines für die Zuckerproduktion nicht geeigneten Restanteils der Zuckerrüben konfiguriert ist.

Die Darstellung in **Fig. 2** zeigt ein Blockdiagramm eines ersten Ausführungsbeispiels eines mobilen Systems 51, 52, 53 gemäß der Erfindung. Das mobile System 51, 53 kann als Rübenroder oder als Rübentransporter ausgebildet sein, der eine Rübenaufnahme 60 aufweist, in welcher zumindest eine erste Teilmenge der Zuckerrüben als Schüttung aufgenommen wird. Alternativ kann das mobile System 52 als Rübenreinigungslader ausgebildet sein, der eine als Fördereinrichtung ausgestaltete Rübenaufnahme 60 umfasst, in welcher ein Rübenstrom aufgenommen ist.

Das mobile System 51, 52, 53 umfasst zudem ein optisches Bilderfassungssystem 70 mit einer optischen Bilderfassungsvorrichtung 71 zur Erfassung der Schüttung bzw. des Rübenstroms in der Rübenaufnahme 60. Die optische Bilderfassungseinrichtung 71 ist dazu konfiguriert, als Nutzanteil einen Anteil von Rübenköpfen und Rübenkörpern und Rübenschwänzen an der Schüttung bzw. dem Rübenstrom zu bestimmen und als Restanteil einen Anteil von Fremdkörpern, insbesondere Blättern, Unkraut oder Verschmutzungen, der Schüttung bzw. dem Rübenstrom zu bestimmen. Der bestimmte Nutzanteil bzw. Restanteil kann an die Zuckerproduktionsanlage übertragen werden. In der Zuckerproduktionsanlage kann die Reinigung der Zuckerrüben in Abhängigkeit von dem bestimmten Restanteil eingestellt werden.

Falls das mobile System 51 als Rübenroder ausgebildet ist, so umfasst es bevorzugt eine Rodevorrichtung zum Roden der Zuckerrüben sowie eine Rübenaufnahme 60 in Form eines Vorratsbunkers zum Lagern der Zuckerrüben. Ist das mobile System 52 als Rübenreinigungslader ausgestaltet, so ist die Rübenaufnahme 60 bevorzugt als Fördereinrichtung ausgestaltet. Der Rübenreinigungslader umfasst eine Aufnahmeeinheit zur Aufnahme von Zuckerrüben, eine Reinigungseinheit zur Reinigung der aufgenommenen Zuckerrüben und einen Überlader zur Ausgabe der gereinigten Zuckerrüben, insbesondere an ein separates Transportfahrzeug. Die als Fördereinrichtung ausgestaltete Rübenaufnahme 60 kann entweder in der Aufnahmeeinheit, der Reinigungseinheit oder dem Überlader angeordnet sein. Falls das mobile System 53 als Rübentransporter ausgebildet ist, so weist dieser eine als Ladefläche ausgebildete Rübenaufnahme 60 auf.

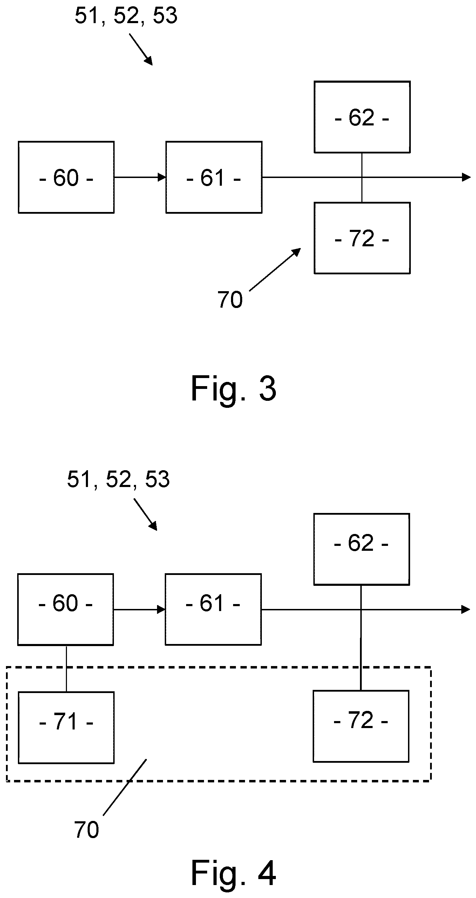

**In** **Fig. 3** ist ein Blockdiagramm eines mobilen Systems 51, 52, 53 gemäß einem zweiten Ausführungsbeispiel dargestellt, welches eine Schneideinrichtung 61 zum Schneiden zumindest einer zweiten Teilmenge der Zuckerrüben zu einer geschnittenen Teilmenge aufweist. Die Zuckerrüben werden der Schneideinrichtung 61 aus eine Rübenaufnahme 60 zugeführt, welche beispielsweise als Vorratsbunker zur Aufnahme einer Schüttung an Zuckerrüben oder als Fördereinrichtung zur Aufnahme eines Rübenstroms ausgestaltet sein kann. Die durch die Schneideinrichtung 61 erzeugte geschnittene Teilmenge umfasst geschnittene Zuckerrüben und Fremdkörper, insbesondere Blätter, Unkraut oder Verschmutzungen. Die geschnittene Teilmenge wird - als Strom geschnittener Zuckerrüben - an einer Nahinfrarotspektroskopie-Vorrichtung 62 und einer optischen Bilderfassungsvorrichtung 72 vorbeigeführt. Dabei sind die Nahinfrarotspektroskopie-Vorrichtung 62 und die optische Bilderfassungsvorrichtung 72 auf denselben Bereich der geschnittenen Teilmenge gerichtet, so dass durch die Nahinfrarotspektroskopie-Vorrichtung 62 und die optische Bilderfassungsvorrichtung 72 identische geschnittene Zuckerrüben erfasst werden. Die Nahinfrarotspektroskopie-Vorrichtung 62 ist dazu eingerichtet, Inhaltsstoffe der geschnittenen Teilmenge zu bestimmen, insbesondere Inhaltsstoffe der geschnittenen Zuckerrüben. Die optische Bilderfassungsvorrichtung 72 ist dazu konfiguriert, als Nutzanteil einen Anteil der geschnittenen Zuckerrüben und/oder als Restanteil einen Anteil der Fremdkörper an der geschnittenen Teilmenge zu bestimmen. Bevorzugt wird durch die Nahinfrarotspektroskopie-Vorrichtung 62 der Zuckergehalt bestimmt und durch die optische Bilderfassungsvorrichtung 72 wird als Nutzanteil der Anteil der geschnittenen Zuckerrüben bestimmt. Diese Daten können an die Zuckerproduktionsanlage übermittelt werden, in welcher das Gewicht der gelieferte Rübenmenge bestimmt wird. In Abhängigkeit von dem Gewicht der gelieferten Rüben, dem bestimmten Zuckergehalt und dem bestimmten Nutzanteil wird dann die gelieferte Zuckermenge bestimmt. Dieser Wert kann zur Abrechnung der gelieferten Menge und/oder zur Einstellung der Zuckerproduktion verwendet werden. Alternativ oder zusätzlich kann der bestimmte Zuckergehalt dazu herangezogen werden, festzulegen, in welcher Reihenfolge bestimmte Chargen an Zuckerrüben in der Zuckerproduktionsanlage verarbeitet werden. So ist es beispielsweise möglich, geschädigte und/oder angefaulte Zuckerrüben in der Zuckerproduktionsanlage priorisiert zu verarbeiten. Ferner ist es möglich, Zuckerrübenchargen mit ähnlichem Zuckergehalt in der Zuckerproduktionsanlage zusammen zu verarbeiten.

Falls das mobile System 51 als Rübenroder ausgebildet ist, so umfasst es bevorzugt eine Rodevorrichtung zum Roden der Zuckerrüben sowie eine Rübenaufnahme 60 in Form eines Vorratsbunkers zum Lagern der Zuckerrüben. Bevorzugt umfasst der Rübenroder eine Zuführeinrichtung, welche dazu eingerichtet ist, der Schneideinrichtung 61 Zuckerrüben aus dem Vorratsbunker zuzuführen. Ist das mobile System 52 als Rübenreinigungslader ausgestaltet, so ist die Rübenaufnahme 60 bevorzugt als Fördereinrichtung ausgestaltet. Der Rübenreinigungslader umfasst eine Aufnahmeeinheit zur Aufnahme von Zuckerrüben, eine Reinigungseinheit zur Reinigung der aufgenommenen Zuckerrüben und einen Überlader zur Ausgabe der gereinigten Zuckerrüben, insbesondere an ein separates Transportfahrzeug. Die als Fördereinrichtung ausgestaltete Rübenaufnahme 60 kann entweder in der Aufnahmeeinheit, der Reinigungseinheit oder dem Überlader angeordnet sein. Über eine Zuführeinrichtung werden der Schneideinrichtung 61 Rüben zugeführt. Falls das mobile System 53 als Rübentransporter ausgebildet ist, so weist dieser eine als Ladefläche ausgebildete Rübenaufnahme 60 auf. Der Rübentransporter weist dann eine Zuführeinrichtung auf, welche dazu eingerichtet ist, der Schneideinrichtung 61 Zuckerrüben von der Ladefläche zuzuführen.

Die **Fig. 4** zeigt ein mobiles System 51, 52, 53 gemäß einem dritten Ausführungsbeispiel. Das mobile System 51, 52, 53 gemäß dem dritten Ausführungsbeispiel weist dieselben Merkmale wie das mobile System 51, 52, 53 gemäß dem zweiten Ausführungsbeispiel auf, weswegen auf die Beschreibung des zweiten Ausführungsbeispiels verwiesen wird. Zusätzlich umfasst das mobile System 51, 52, 53 gemäß dem dritten Ausführungsbeispiel eine weitere optische Bilderfassungsvorrichtung 71 zur Erfassung der Schüttung bzw. des Rübenstroms in der Rübenaufnahme 60. Die weitere optische Bilderfassungseinrichtung 71 ist dazu konfiguriert, als Nutzanteil einen Anteil von Rübenköpfen und Rübenkörpern und Rübenschwänzen an der Schüttung bzw. dem Rübenstrom zu bestimmen und als Restanteil einen Anteil von Fremdkörpern, insbesondere Blättern, Unkraut oder Verschmutzungen, der Schüttung bzw. dem Rübenstrom zu bestimmen.

### Bezugszeichenliste

- 1: Verfahrensschritt "Schneiden"
- 2: Verfahrensschritt "Extraktion"
- 3: Verfahrensschritt "Kalkung"
- 4: Verfahrensschritt "Karbonisierung"
- 5: Verfahrensschritt "Filtration"
- 6: Verfahrensschritt "Eindickung"
- 7: Verfahrensschritt "Kristallisation"
- 8: Verfahrensschritt "Trennen"
- 11: Zuckerrübenschnitzel
- 14: Rohsaft
- 15: Mischung aus Rohsaft und Kalkmilch
- 16: Mischung aus Rohsaft und ausgefällten Nichtzuckerstoffen
- 17: Dünnsaft
- 18: Dicksaft
- 19: Mischung aus Dicksaft und Kristallzucker

- 21: Verfahrensschritt "Roden"
- 22: Verfahrensschritt "Verladen"
- 23: Verfahrensschritt "Transportieren"

- 51: Rübenroder
- 52: Rübenreinigungslader
- 53: Rübentransporter

- 60: Rübenaufnahme
- 61: Schneideinrichtung
- 62: Nahinfrarotspektroskopie-Vorrichtung
- 70: Bilderfassungssystem
- 71: Bilderfassungsvorrichtung
- 72: Bilderfassungsvorrichtung

## Patentansprüche

1. Mobiles System zum Ernten und/oder Transportieren und/oder Verladen von Zuckerrüben, **gekennzeichnet durch**
ein optisches Bilderfassungssystem (70), das zur Bestimmung mehrerer für die Zuckerproduktion geeigneter Nutzanteile der Zuckerrüben konfiguriert ist,
wobei die mehreren für die Zuckerproduktion geeigneten Nutzanteile einen Anteil von Rübenköpfen und einen Anteil von Rübenkörpern und einen Anteil von Rübenschwänzen umfassen.

2. Mobiles System nach Anspruch 1, **gekennzeichnet durch**
eine Rübenaufnahme (60) zur Aufnahme zumindest einer ersten Teilmenge der Zuckerrüben als Schüttung oder Rübenstrom,
wobei das optische Bilderfassungssystem (70) eine erste optische Bilderfassungsvorrichtung (71) zur Erfassung der Schüttung bzw. des Rübenstroms aufweist, die dazu konfiguriert ist, als Nutzanteil einen Anteil von Rübenköpfen und Rübenkörpern und Rübenschwänzen an der Schüttung bzw. dem Rübenstrom zu bestimmen und als Restanteil einen Anteil von Fremdkörpern, insbesondere Blättern, Unkraut oder Verschmutzungen, der Schüttung bzw. dem Rübenstrom zu bestimmen, und eine Trenneinrichtung zum Trennen des bestimmten Restanteils, insbesondere des Anteils an Fremdkörpern, von der Schüttung bzw. dem Rübenstrom.

3. Mobiles System nach einem der vorhergehenden Ansprüche, **gekennzeichnet durch**
eine Schneideinrichtung (61) zum Schneiden zumindest einer zweiten Teilmenge der Zuckerrüben zu einer geschnittenen Teilmenge umfassend geschnittene Zuckerrüben und Fremdkörper, insbesondere Blätter, Unkraut oder Verschmutzungen, und
eine Nahinfrarotspektroskopie-Vorrichtung (62) zur Bestimmung von Inhaltstoffen der geschnittenen Teilmenge, insbesondere der geschnittenen Zuckerrüben,
wobei das optische Bilderfassungssystem (70) eine zweite optische Bilderfassungsvorrichtung (72) zur Erfassung der geschnittenen Teilmenge aufweist, die dazu konfiguriert ist, als Nutzanteil einen Anteil der geschnittenen Zuckerrüben und/oder als Restanteil einen Anteil der Fremdkörper an der geschnittenen Teilmenge zu bestimmen, insbesondere wobei die zweite optische Bilderfassungsvorrichtung (72) auf denselben Bereich der geschnittenen Teilmenge gerichtet ist wie die Nahinfrarotspektroskopie-Vorrichtung (62).

4. Mobiles System nach Anspruch 3, **gekennzeichnet durch** eine Trenneinrichtung zum Trennen des bestimmten Restanteils, insbesondere des Anteils an Fremdkörpern, von der geschnittenen Teilmenge.

5. Mobiles System nach einem der vorhergehenden Ansprüche, **dadurch gekennzeichnet, dass** das mobile System als Rübenroder (51) ausgebildet ist und eine Rodevorrichtung zum Roden der Zuckerrüben sowie einen Vorratsbunker zum Lagern der Zuckerrüben aufweist.

6. Mobiles System nach einem der Ansprüche 1 bis 4, **dadurch gekennzeichnet, dass** das mobile System als Rübenreinigungslader (52) ausgebildet ist und eine Aufnahmeeinheit zur Aufnahme von Zuckerrüben, eine Reinigungseinheit zur Reinigung der aufgenommenen Zuckerrüben und einen Überlader zur Ausgabe der gereinigten Zuckerrüben, insbesondere an ein separates Transportfahrzeug, aufweist.

7. Mobiles System nach einem der Ansprüche 1 bis 4, **dadurch gekennzeichnet, dass** das mobile System als Rübentransporter (53) ausgebildet ist und eine Ladefläche zur Aufnahme der Zuckerrüben aufweist.

8. Zuckerproduktionssystem mit
einer mobilen Einrichtung (51, 52, 53) nach einem der vorhergehenden Ansprüche und
mit einer Zuckerproduktionsanlage,
**dadurch gekennzeichnet, dass**
die Zuckerproduktionsanlage dazu eingerichtet ist, mindestens einen Prozessparameter in Abhängigkeit von dem mit dem optischen Bilderfassungssystem (70) bestimmten Nutzanteilen einzustellen.

9. Verfahren zur Zuckerproduktion,
wobei Zuckerrüben mit einem mobilen System (51, 52, 53) geerntet und/oder transportiert und/oder verladen werden,
wobei mit einem optischen Bilderfassungssystem (70) des mobilen Systems (51, 52, 53) mehrere für die Zuckerproduktion geeignete Nutzanteile der Zuckerrüben bestimmt werden,
wobei die mehreren für die Zuckerproduktion geeigneten Nutzanteile einen Anteil von Rübenköpfen und einen Anteil von Rübenkörpern und einen Anteil von Rübenschwänzen umfassen,
wobei in einer Zuckerproduktionsanlage mindestens ein Prozessparameter in Abhängigkeit von dem mit dem optischen Bilderfassungssystem bestimmten Nutzanteilen eingestellt wird.

10. Verfahren nach Anspruch 9, **dadurch gekennzeichnet, dass** der Prozessparameter ein Prozessparameter einer Extraktionseinrichtung ist, welcher Zuckerrübenschnitzel (11) zugeführt und aus der Zuckerrübenschnitzelreste sowie Rohsaft (14) abgezogen werden.

11. Verfahren nach Anspruch 10, **dadurch gekennzeichnet, dass** der Prozessparameter eine Extraktionszeit ist, die angibt, für welche Dauer die Zuckerrübenschnitzel in der Extraktionseinrichtung verweilen.

12. Verfahren nach einem der Ansprüche 9 oder 10, **dadurch gekennzeichnet, dass** der Prozessparameter eine Extraktionstemperatur ist, die angibt, bei welcher Temperatur die Extraktionseinrichtung betrieben wird.

13. Verfahren nach einem der Ansprüche 9 bis 12, **dadurch gekennzeichnet, dass** der Prozessparameter ein Prozessparameter eines Kalkungsschritts (3) ist, insbesondere eine Kalkmilchzugabemenge und/oder einen Sollwert des pH-Werts und/oder eine Konzentration der Kalkmilch und/oder eine Zugabemenge von gefälltem Calciumcarbonat und/oder eine Schlammsaftkonzentratrücknahmemenge ist.

14. Verfahren nach einem der Ansprüche 9 bis 13, **dadurch gekennzeichnet, dass** der Prozessparameter ein Prozessparameter eines Karbonisierungsschritts (4) ist.

15. Verfahren nach einem der Ansprüche 9 bis 14, **dadurch gekennzeichnet, dass** der Prozessparameter ein Prozessparameter eines Filtrierungsschritts (5) oder eines Eindickungsschritts (6) oder eines Kristallisationsschritts (7) oder eines Trennschritts (8) ist.

## Claims

1. Mobile system for harvesting and/or transporting and/or loading sugar beets, **characterized by**
an optical image capture system (70) which is configured to determine a plurality of usable fractions of the sugar beets that are suitable for sugar production,
wherein the plurality of usable fractions suitable for sugar production comprise a proportion of beet crowns and a proportion of beet bodies and a proportion of beet tails.

2. Mobile system according to claim 1, **characterized by**
a beet intake (60) for receiving at least a first subset of the sugar beets as a bulk load or beet stream,
wherein the optical image capture system (70) comprises a first optical image capture device (71) for capturing the bulk load or the beet stream, which is configured to determine, as a usable fraction, a proportion of beet crowns and beet bodies and beet tails in the bulk load or in the beet stream and to determine, as a residual fraction, a proportion of foreign bodies, in particular leaves, weeds or contaminants, in the bulk load or in the beet stream, and a separating device for separating the determined residual fraction, in particular the proportion of foreign bodies, from the bulk load or the beet stream.

3. Mobile system according to any of the preceding claims, **characterized by**
a cutting device (61) for cutting at least a second subset of the sugar beets into a cut subset comprising cut sugar beets and foreign bodies, in particular leaves, weeds or contaminants, and
a near-infrared spectroscopy device (62) for determining constituents of the cut subset, in particular of the cut sugar beets,
wherein the optical image capture system (70) comprises a second optical image capture device (72) for capturing the cut subset, which is configured to determine, as a usable fraction, a proportion of the cut sugar beets and/or, as a residual fraction, a proportion of the foreign bodies in the cut subset, in particular wherein the second optical image capture device (72) is directed at the same region of the cut subset as the near-infrared spectroscopy device (62).

4. Mobile system according to claim 3, **characterized by** a separating device for separating the determined residual fraction, in particular the proportion of foreign bodies, from the cut subset.

5. Mobile system according to any of the preceding claims, **characterized in that** the mobile system is designed as a beet harvester (51) and comprises a lifting device for lifting the sugar beets as well as a storage bunker for storing the sugar beets.

6. Mobile system according to any of claims 1 to 4, **characterized in that** the mobile system is designed as a beet cleaner loader (52) and comprises a pick-up unit for picking up sugar beets, a cleaning unit for cleaning the picked-up sugar beets and a transfer conveyor for discharging the cleaned sugar beets, in particular onto a separate transport vehicle.

7. Mobile system according to any of claims 1 to 4, **characterized in that** the mobile system is designed as a beet transporter (53) and comprises a loading area for receiving the sugar beets.

8. Sugar production system comprising
a mobile device (51, 52, 53) according to any of the preceding claims and
a sugar production plant,
**characterized in that**
the sugar production plant is adapted to set at least one process parameter as a function of the usable fractions determined by means of the optical image capture system (70).

9. Method for sugar production,
wherein sugar beets are harvested and/or transported and/or loaded by means of a mobile system (51, 52, 53),
wherein a plurality of usable fractions of the sugar beets that are suitable for sugar production are determined by means of an optical image capture system (70) of the mobile system (51, 52, 53),
wherein the plurality of usable fractions suitable for sugar production comprise a proportion of beet crowns and a proportion of beet bodies and a proportion of beet tails,
wherein at least one process parameter is set in a sugar production plant as a function of the usable fractions determined by means of the optical image capture system.

10. Method according to claim 9, **characterized in that** the process parameter is a process parameter of an extraction device to which sugar beet cossettes (11) are fed and from which sugar beet cossette residues as well as raw juice (14) are withdrawn.

11. Method according to claim 10, **characterized in that** the process parameter is an extraction time which indicates the period for which the sugar beet cossettes remain in the extraction device.

12. Method according to any of claims 9 or 10, **characterized in that** the process parameter is an extraction temperature which indicates the temperature at which the extraction device is operated.

13. Method according to any of claims 9 to 12, **characterized in that** the process parameter is a process parameter of a liming step (3), in particular a milk-of-lime addition quantity and/or a setpoint of the pH value and/or a concentration of the milk of lime and/or an addition quantity of precipitated calcium carbonate and/or a recycled quantity of sludge juice concentrate.

14. Method according to any of claims 9 to 13, **characterized in that** the process parameter is a process parameter of a carbonatation step (4).

15. Method according to any of claims 9 to 14, **characterized in that** the process parameter is a process parameter of a filtration step (5) or of an evaporation step (6) or of a crystallization step (7) or of a separation step (8).

## Revendications

1. Système mobile pour la récolte et/ou le transport et/ou le chargement de betteraves sucrières, **caractérisé par**
un système optique de saisie d'images (70) qui est configuré pour déterminer plusieurs fractions utiles des betteraves sucrières appropriées à la production de sucre,
les plusieurs fractions utiles appropriées à la production de sucre comprenant une proportion de collets de betteraves, une proportion de corps de betteraves et une proportion de queues de betteraves.

2. Système mobile selon la revendication 1, **caractérisé par**
un dispositif de réception de betteraves (60) pour recevoir au moins une première quantité partielle des betteraves sucrières sous forme de vrac ou de flux de betteraves,
le système optique de saisie d'images (70) comportant un premier dispositif optique de saisie d'images (71) pour saisir le vrac ou le flux de betteraves, lequel est configuré pour déterminer, en tant que fraction utile, une proportion de collets de betteraves, de corps de betteraves et de queues de betteraves dans le vrac ou dans le flux de betteraves et pour déterminer, en tant que fraction résiduelle, une proportion de corps étrangers, en particulier de feuilles, de mauvaises herbes ou d'impuretés, dans le vrac ou dans le flux de betteraves, et un dispositif de séparation pour séparer la fraction résiduelle déterminée, en particulier la proportion de corps étrangers, du vrac ou du flux de betteraves.

3. Système mobile selon l'une quelconque des revendications précédentes, **caractérisé par**
un dispositif de coupe (61) pour couper au moins une deuxième quantité partielle des betteraves sucrières en une quantité partielle coupée comprenant des betteraves sucrières coupées et des corps étrangers, en particulier des feuilles, des mauvaises herbes ou des impuretés, et
un dispositif de spectroscopie dans le proche infrarouge (62) pour déterminer des constituants de la quantité partielle coupée, en particulier des betteraves sucrières coupées,
le système optique de saisie d'images (70) comportant un deuxième dispositif optique de saisie d'images (72) pour saisir la quantité partielle coupée, lequel est configuré pour déterminer, en tant que fraction utile, une proportion des betteraves sucrières coupées et/ou, en tant que fraction résiduelle, une proportion des corps étrangers dans la quantité partielle coupée, en particulier le deuxième dispositif optique de saisie d'images (72) étant dirigé vers la même zone de la quantité partielle coupée que le dispositif de spectroscopie dans le proche infrarouge (62).

4. Système mobile selon la revendication 3, **caractérisé par** un dispositif de séparation pour séparer la fraction résiduelle déterminée, en particulier la proportion de corps étrangers, de la quantité partielle coupée.

5. Système mobile selon l'une quelconque des revendications précédentes, **caractérisé en ce que** le système mobile est réalisé sous forme d'arracheuse de betteraves (51) et comporte un dispositif d'arrachage pour arracher les betteraves sucrières ainsi qu'une trémie de stockage pour stocker les betteraves sucrières.

6. Système mobile selon l'une quelconque des revendications 1 à 4, **caractérisé en ce que** le système mobile est réalisé sous forme de chargeuse-nettoyeuse de betteraves (52) et comporte une unité de réception pour recevoir des betteraves sucrières, une unité de nettoyage pour nettoyer les betteraves sucrières reçues et un transbordeur pour décharger les betteraves sucrières nettoyées, en particulier sur un véhicule de transport séparé.

7. Système mobile selon l'une quelconque des revendications 1 à 4, **caractérisé en ce que** le système mobile est réalisé sous forme de transporteur de betteraves (53) et comporte une surface de chargement pour recevoir les betteraves sucrières.

8. Système de production de sucre comportant
un dispositif mobile (51, 52, 53) selon l'une quelconque des revendications précédentes et
une installation de production de sucre,
**caractérisé en ce que**
l'installation de production de sucre est conçue pour régler au moins un paramètre de procédé en fonction des fractions utiles déterminées au moyen du système optique de saisie d'images (70).

9. Procédé de production de sucre,
dans lequel des betteraves sucrières sont récoltées et/ou transportées et/ou chargées au moyen d'un système mobile (51, 52, 53),
dans lequel plusieurs fractions utiles des betteraves sucrières appropriées à la production de sucre sont déterminées au moyen d'un système optique de saisie d'images (70) du système mobile (51, 52, 53),
dans lequel les plusieurs fractions utiles appropriées à la production de sucre comprennent une proportion de collets de betteraves, une proportion de corps de betteraves et une proportion de queues de betteraves,
dans lequel, dans une installation de production de sucre, au moins un paramètre de procédé est réglé en fonction des fractions utiles déterminées au moyen du système optique de saisie d'images.

10. Procédé selon la revendication 9, **caractérisé en ce que** le paramètre de procédé est un paramètre de procédé d'un dispositif d'extraction auquel des cossettes de betteraves sucrières (11) sont amenées et duquel des résidus de cossettes de betteraves sucrières ainsi que du jus brut (14) sont soutirés.

11. Procédé selon la revendication 10, **caractérisé en ce que** le paramètre de procédé est une durée d'extraction qui indique pendant quelle durée les cossettes de betteraves sucrières séjournent dans le dispositif d'extraction.

12. Procédé selon l'une des revendications 9 ou 10, **caractérisé en ce que** le paramètre de procédé est une température d'extraction qui indique à quelle température le dispositif d'extraction est exploité.

13. Procédé selon l'une quelconque des revendications 9 à 12, **caractérisé en ce que** le paramètre de procédé est un paramètre de procédé d'une étape de chaulage (3), en particulier une quantité d'ajout de lait de chaux et/ou une valeur de consigne du pH et/ou une concentration du lait de chaux et/ou une quantité d'ajout de carbonate de calcium précipité et/ou une quantité de reprise de concentré de jus de boues.

14. Procédé selon l'une quelconque des revendications 9 à 13, **caractérisé en ce que** le paramètre de procédé est un paramètre de procédé d'une étape de carbonatation (4).

15. Procédé selon l'une quelconque des revendications 9 à 14, **caractérisé en ce que** le paramètre de procédé est un paramètre de procédé d'une étape de filtration (5) ou d'une étape d'évaporation (6) ou d'une étape de cristallisation (7) ou d'une étape de séparation (8).
